# EUROPEAN PATENT SPECIFICATION

(11) **EP 2 408 166 B1**
(45) Date of publication and mention of the grant of the patent: **31.08.2016**
(21) Application number: 10758032.6
(22) Date of filing: 26.03.2010
(51) Int. Cl.: H04L 29/06

(54) **FILTERING METHOD, SYSTEM AND NETWORK DEVICE THEREFOR**
FILTERUNGSVERFAHREN UND -SYSTEM SOWIE NETZWERKVORRICHTUNG DAFÜR
PROCÉDÉ DE FILTRAGE, SYSTÈME ET DISPOSITIF DE RÉSEAU ASSOCIÉS

(30) Priority: 30.03.2009 CN 200910106362
(43) Date of publication of application: 18.01.2012
(73) Proprietor: Huawei Technologies Co., Ltd., Longgang District Shenzhen, Guangdong 518129 (CN)
(72) Inventor: SU, Baowu, Shenzhen Guangdong 518129 (CN)
(74) Representative: Thun, Clemens
(86) International application number: PCT/CN2010/071361
(87) International publication number: WO 2010/111930

(56) References cited:
- CN-A- 1 573 752
- US-A1- 2004 010 710
- US-A1- 2006 021 031
- US-A1- 2006 253 581
- US-A1- 2007 022 468

## Description

### FIELD OF THE INVENTION

The present invention relates to the network security technology in the communication field, and more particularly to a filtering method, system, and network equipment.

### BACKGROUND OF THE INVENTION

With the rapid development of communication technology, operating systems applied to user terminals such as intelligent mobile phones, Internet Protocol (IP) telephones, personal computers are becoming more standardized, what's more, corresponding operating systems have the characteristics of openness, universality and so on. Moreover, many user terminals further provide functions including Bluetooth function, infrared function, multimedia message, General Packet Radio Service (GPRS) Internet access, cyber surfing, and wireless Internet access.

Corresponding user terminals also provide open runnable interfaces for malwares like viruses and Trojan horses, so that the user terminals are more and more vulnerable to malwares such as various viruses. Moreover, viruses can spread widely through the user terminals, resulting that the performance of the communication system is affected.

Currently, virus scanning and removal are mainly carried out by means of installing antivirus softwares on user terminals while users are browsing web pages, downloading and executing files. Meanwhile, when viruses are spreading through or attacking the user terminals, the antivirus softwares can detect corresponding virus programs to prevent viruses from spreading or attacking.

The prior art at least has the following problems.
(1) For user terminals such as intelligent mobile phones, IP telephones, and personal computers, due to the limitation of hardware processing capacities, the installation of antivirus softwares will occupy large memory space and many CPU resources. Take a Kaspersky antivirus software installed in a personal computer for example, large memory space is needed for the installation of the software, and sometimes up to 80% of the CPU is occupied, which seriously affects the normal working of the CPU.
(2) In such modes, there still is the risk of being bypassed by malwares. Currently, a lot of Trojan horses of malwares can identify the antivirus softwares installed on the user terminals and can close the antivirus softwares of the user terminals or bypass the detection of the antivirus softwares of the user terminals, which causes that the user terminals cannot identify such viruses and consequently cannot effectively prevent viruses from spreading or attacking.

US 2004/0010710 A1 provides a security control method to request access to a web site, by retrieving an Uniform Resource Locator, URL, from a request, verifying who sent the request and the identification of the user, and obtaining the represented role of the user, corresponding to the role of the authority of the user for accessing a web site. Allowing access to the data stored in the web site depends on the authority granted to the individual user, wherein the data is the targeted resource located by the URL.

US 2007/0022468 A1 relates to packet transmission equipment for dynamically changing the user security level according to processing results of a platform module, and multiple application modules and a packet receiver and a packet transmitter. The platform module comprises a packet transfer processor for transferring packets input from the packet receiver to the application module or the packet transmitter, and a user identification module for identifying the sender (user) of the received packet, and a memory for storing according to the user, one or multiple application modules as the destination for the packet sent from the user, as well as security levels for the corresponding users. The application module further includes a packet transfer processor for transferring packets to the platform module, other application modules, or a packet transmitter, and a security level identification module for identifying the security level of the packet that was transferred, and a packet processor for processing the packet that was transferred.

Further, US 2006/0253581 A1 refers to methods and systems involving receiving an indicator of an attempted interaction of a client computing facility with an item of content associated with a website and presenting an indicator of reputation to a client computing facility attempting to interact with the web content. The indicator of reputation may be based at least in part upon whether an entity associated with the web content seeks to manipulate a user in order to obtain information from the user.

Further, US 2006/0021031A1 refers to a method and system to protect users against potentially fraudulent activities associated with spoof web sites. According to one aspect, the URL of a document downloaded via a web browser client is compared to the URLs in a list of URLs for known spoof sites. If the URL for the downloaded document is found in the list of URLs for known spoof sites, a security indicator is displayed to the user to indicate to the user that the downloaded document is associated with a known spoof site. According to another aspect, a security server maintains a master black list and periodically communicates updates of the master black list to the local list of a client security application.

### SUMMARY OF THE INVENTION

The present invention is directed to providing a filtering method, system, and network equipment, which effectively prevents malwares like viruses, worms, and Trojan horses from spreading and attacking, reduces the threat to users from malwares such as viruses, and increases network security.

To achieve the foregoing objective, embodiments of the present invention provide the following technical solutions.

A filtering method, carried out by a network equipment, the method includes: intercepting a request packet sent by a user terminal to the Internet; extracting Uniform Resource Locator, URL, information from the request packet; determining a security level according to the URL information, wherein the security level is a level of threat that an access to the URL would represent to the user terminal and the security level is one of safe, dangerous, doubtful, or 'unknown'; and
when the security level is safe, sending the request packet of the user terminal to the Internet server;
when the security level is dangerous, discarding the request packet to terminate the request for the URL by the user terminal;
when the security level is doubtful, returning a prompt message to the user terminal to inform the user terminal that the request is doubtful; and
when the security level is 'unknown', sending the URL information to other network equipment for determining the security level, and processing according to returned security level.

A filtering system, applied to a network equipment, comprising:
an intercepting unit, configured to intercept a request packet sent by a user terminal to the Internet;
an extracting unit, configured to extract URL information from the request packet and send the URL information to a determining unit;
the determining unit, configured to determine a security level according to the URL information, wherein the security level is a level of threat that an access to the URL would represent to the user terminal and the security level is one of safe, dangerous, doubtful, or 'unknown'; and
   a processing unit, configured to
   when the security level is safe, send the request packet of the user terminal to the Internet server;
   when the security level is dangerous, discard the request packet to terminate the request for the URL by the user terminal;
   when the security level is doubtful, return a prompt message to the user terminal to inform the user terminal that the request is doubtful; and
when the security level is 'unknown', send the URL information to other network equipment for determining the security level, and processing according to returned security level.

A network equipment for filtering request packets sent by a user terminal, comprising :
a receiving unit, configured to receive information including Uniform Resource Locator, URL corresponding to an Internet server;
a determining unit, configured to determine a security level according to the URL information, wherein the security level is a level of threat that an access to the URL would represent to the user terminal and the security level is one of safe, dangerous, doubtful, or 'unknown'; and
   a processing unit, configured to
   when the security level is safe, send the request packet of the user terminal to the Internet server;
   when the security level is dangerous, discard the request packet to terminate the request for the URL by the user terminal;
   when the security level is doubtful, return a prompt message to the user terminal to inform the user terminal that the request is doubtful; and when the security level is 'unknown', send the URL information to other network equipment for determining the security level, and processing according to returned security level.

It can be known from the detailed implementation solutions provided in embodiments of the present invention that, the request packet sent by the user terminal to the Internet is intercepted and the URL information is extracted from the request packet; the security level corresponding to the URL information is determined according to the URL information; and the request packet is processed according to the security level. Therefore, the problem that the installation of antivirus softwares on the user terminals occupies memory space and CPU resources and the problem of the risk of being bypassed by malwares are solved, which effectively prevents malwares such as viruses from spreading and attacking, reduces the threat to user terminals from viruses, and improves network security and user experience.

### BRIEF DESCRIPTION OF THE DRAWINGS

FIG 1 is a flow chart of a filtering method according to an embodiment of the present invention;
FIG 2 is a flow chart of a detailed implementation of a filtering method according to an embodiment of the present invention;
FIG 3 is a schematic structural diagram of a filtering system according to an embodiment of the present invention;
FIG 4 is a schematic structural diagram of a detailed implementation of a filtering system according to an embodiment of the present invention; and
FIG 5 is a schematic structural diagram of a network equipment according to an embodiment of the present invention.

### DETAILED DESCRIPTION OF THE EMBODIMENTS

For better understanding of the objective, technical solution and merits of the present invention, the following describes embodiments of the present invention in detail with reference to the accompanying drawings.

It should be clear that the embodiments to be described are only some of the embodiments of the present invention, not all embodiments of the present invention. Other embodiments derived by those of ordinary skill in the art based on the embodiments given wherein without any creative effort, shall all fall in the protection scope of the present invention.

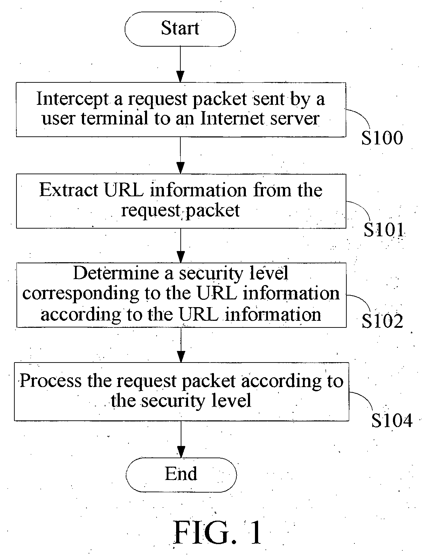

FIG 1 is a flow chart of a filtering method according to an embodiment of the present invention. The method is applied to network side equipment and includes the following steps.

In step S100, a request packet sent by a user terminal to an Internet server is intercepted.

In step S101, Uniform Resource Locator (URL) information is extracted from the request packet.

The network equipment may extract the URL information from the request packet by means of deep packet inspection (DPI) or other means. The network equipment may be one or any combination of equipments such as a service router (SR), a broadband remote access server (BRAS), and a gateway GPRS support node (GGSN).

In step S102, a security level corresponding to the URL information is determined according to the URL information.

A local service function entity or storage device or cloud security server connected to the network equipment stores a URL database, and each piece of the URL information in the URL database has a security level indicator corresponding to the URL information.

The determining the security level corresponding to the URL information specifically includes:
searching in the URL database locally cached in the network equipment and determining the security level corresponding to the URL information; or
receiving the security level which is corresponding to the URL information and is determined and returned by the local service function entity; wherein the security level of the URL information is the security level which is returned after the local service function entity searches in the URL database locally cached by the local service function entity and determines the security level of the URL information; or
receiving the security level which is corresponding to the URL information and is determined and returned by a cloud security server.

The obtaining the security level described above includes obtaining the security level from the URL database cached by the network equipment, or from the URL database cached by the local service function entity connected with the network equipment, or from any equipment of the cloud security server. The following cases are also applicable.

When searching in the URL database locally cached in the network equipment and failing to determine the security level corresponding to the URL information, or searching by the local service function entity in the locally cached URL database and failing to determine the security level corresponding to the URL information, the URL information is sent to the cloud security server to process, that is, to search in the URL database of the cloud security server.

In step S104, the request packet is processed according to the security level

The security level information includes one or any combination of: safe, dangerous, doubtful, and unknown.

The processing the request packet according to the security level includes one or any combination of: safe, dangerous, doubtful and unknown.

When the security level information is safe, the request packet of the user terminal is sent to the Internet.

When the security level information is dangerous, the request packet is discarded, and a packet carrying alarm information is returned to the user terminal to prohibit the user terminal from sending the request packet.

When the security level information is doubtful, prompt information is returned to the user terminal to prompt the user terminal that the requested information is doubtful.

When the security level information is unknown, the URL information is sent to other network equipment for determining the security level, and is processed according to the returned security level.

The URL database is updated periodically through the cloud security server. Wherein the cloud security server is also known as a cloud security server cluster or a cloud security end. The cloud security server is mainly an equipment configured to assess security levels of network information resources (such as web pages) according to characteristics such as Trojan horses and malicious programs.

It can be known from the foregoing detailed implementation solution of the embodiment of the present invention that, the request packet sent by the user terminal to the Internet server is intercepted and the URL information is extracted from the request packet; the URL database is searched and the security level corresponding to the URL information is determined according to the URL information; and the request packet is processed according to the security level. Therefore, the problem that the installation of antivirus softwares on the user terminal occupies memory space and CPU resources and the problem of the risk of being bypassed by malwares are solved, which effectively prevents malwares such as viruses from spreading and attacking, reduces the threat to the user terminal from viruses, and improves the network security and user experience.

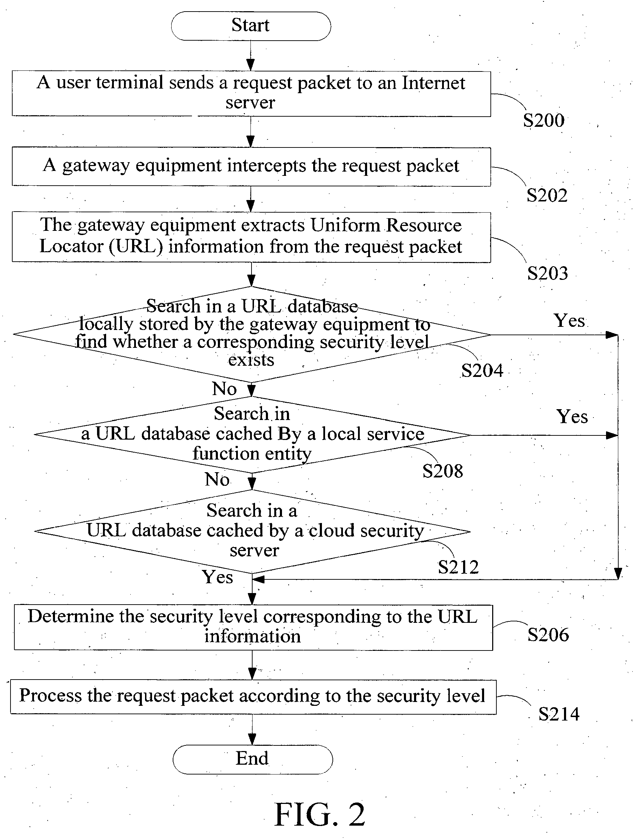

FIG 2 is a flow chart of a detailed implementation of a filtering method according to an embodiment of the present invention. The filtering method may be applied to various network equipments; and a gateway equipment is taken for an example herein to illustrate the implementation of the filtering method, as shown in FIG 2.

In step S200, a user terminal sends a request packet to an Internet server to request access to information resources on the Internet server.

The request packet may be the request packet of http get packet with a target port 80, but is not limited to the request packet.

In step S202, the gateway equipment intercepts the request packet.

In step S203, the gateway equipment extracts URL information from the request packet.

The gateway equipment may be, but is not limited to, a network side routing equipment. The routing equipment may be one or any combination of network equipments such as an SR, a BRAS, and a gateway GPRS support node (GGSN). The following describes the method by taking a router as example.

The router may extract the URL information from the request packet by means of deep packet inspection (DPI) or other means. The obtaining of the URL information may be accomplished by a line processing unit (LPU) in the router.

In step S204, the gateway equipment searches the locally cached URL database according to the URL information and judges whether a security level corresponding to the URL information exists. If the security level exists, step S206 will be performed; if the security level does not exist, step S208 will be performed. Alternatively, step S206 will be performed after step S208 and step S212 are performed.

The local service function entity connected with the gateway equipment or the cloud security server connected with the gateway equipment stores a URL database, and every piece of the URL information in the URL database has a security level indicator corresponding to the URL information.

The URL database stored in the gateway equipment itself or the URL database stored in the local service function entity is updated periodically through the cloud security server. Because the security level information in the URL database is changing, an update mechanism is needed. The URL database stored in the gateway equipment itself or the URL database stored in the local service function entity is updated at regular time intervals. The time interval may be 30 seconds, and may also be adjusted according to actual situations. The cloud security server may be a cloud security server cluster consisting of one or more cloud security servers. The URL database stores the URL information and the security level corresponding to the URL information. This corresponding relationship is also named as a URL list, that is, the URL database stores the URL list, and the corresponding security level may be found out through the URL information in the URL list. Moreover the URL list is updated through an aging mechanism. The URL database stored in the gateway equipment itself or the URL database stored in the local service function entity keep caching the information in the URL list, resulting in more and more information in the locally cached URL list. However, some of the information may be rarely used. Therefore, an aging mechanism is needed to age the information, in the URL list which fails to be matched within a certain time interval (the aging time may be 30 minutes or may also be adjusted according to actual situations), which saves resources of the router and increases the matching efficiency at the same time.

The foregoing carrying out of step S204 may be accomplished by a multi-service unit (MSU) in the router. The LPU of the router redirects the request packet including the URL information to the MSU by means of an access control list (ACL). The MSU may send the URL information to the local service function entity or to the cloud security server through a dedicated interface as required.

In step S206, the security level corresponding to the URL information is determined according to the search result, and is sent to the gateway equipment.

In step S208, searching is performed in the URL database cached by the local service function entity, and if the searching is successful, step S206 will be performed; otherwise, step S212 will be performed.

If the security level corresponding to the URL information is not found in the URL list in the URL database (that is, the locally cached URL database) locally cached by the gateway equipment, that is, the security level corresponding to the URL information cannot be determined, step S208 will be performed. Also, the gateway equipment may directly send the URL information to the local service function entity, so that the local service function entity determines the security level according to the URL information and return the security level to the router.

In step S212, the cloud security server performs a search in the URL list in the locally cached URL database, and if the searching is successful, step S206 will be performed; otherwise, the process will be terminated.

If the security level corresponding to the URL information is not found in the URL list in the URL database cached by the local service function entity, that is, the security level corresponding to the URL information cannot be determined, step S212 will be performed. Also, the gateway equipment may directly send the URL information to the cloud security server, so that the cloud security server determines the security level according to the URL information and returns the security level to the gateway equipment The cloud security server may be a cloud security server cluster consisting of one or more cloud security servers.

In the foregoing steps S204 to S214, the step of searching the URL database according to URL information may be: searching the URL database cached by the gateway equipment itself first, and then, if the security level corresponding to the URL information is not found, searching the URL database cached by the local service function entity; searching the URL database cached by the local service function entity directly; or searching the URL database stored in the cloud security server directly and returning the security level information to the gateway equipment.

The gateway equipment and the cloud security server may be connected by using a high-bandwidth and low-delay link for transmission optimization.

In step S214, the request packet is processed according to the security level.

The security level information includes one or any combination of: safe, dangerous, doubtful, and unknown. The security level includes security evaluation level and/or content evaluation level. The security evaluation level may be classified according to the risk control level defined as required by a user; for example, high, medium, and low security evaluation levels may be configured according to user requirements, and filtering may be performed according to the configuration afterwards. The content evaluation level may be classified according to the contents included in web pages into, for example, adult content, sex education, alcohol/tobacco content, gambling, violence/race discrimination, gun trafficking, entertainment, religion, drug, banned drug, game, education, sociality, parenting, and advertising and so on. The security evaluation level may be combined with the content evaluation level in the form of one or any combination of the classifications to sum up and obtain the security level information, for example, the four types of security level information, which are: safe, dangerous, doubtful, and unknown. Of course, there may be only one or several types of security level information.

When the security level information is safe, the request packet of the user terminal is sent to the Internet server; and the user terminal receives a response packet from the Internet server When the security level information is dangerous, the request packet is discarded, and a packet with alarm information is returned to the user terminal to prohibit the user terminal from sending the request packets. For example, the "dangerous" may be that the web page addressed by the URL includes malwares or viruses, the request packet is discarded directly, and a page or information saying "The web page includes malicious codes like viruses, etc.; access is prohibited" is fed back to the user terminal, so that the user terminal may give up the request according to the prompt.

When the security level information is doubtful, a prompt message is returned to the user terminal to prompt the user terminal that the requested information is doubtful and suggest that the user terminal not visit the page. If the user terminal insists on visiting in spite of the prompt message, the router will continue forwarding the request packet to the Internet; however, certain potential risks exist in this case. If the user terminal confirms, according to the prompt message, not continuing visiting, the router discards the request packet directly, or the request packet may be discarded directly according to the user configuration.

When the security level information is unknown, two modes are available for the user terminal: firstly, sending the URL information to the cloud security server cluster, waiting for the cloud security server cluster to determine the security level, and performing processing according to the returned security level; secondly, sending the request packet of the user terminal to the Internet and then performing detecting and processing.

The gateway equipment such as the network side router can provide virtualized services, that is, different user terminals may define their own filtering strategies, or the router may provide filtering report information to users for their reference periodically, in which the router performs filtering according to user-defined strategies and satisfies diverse demands of users.

It can be known from the foregoing detailed implementation provided by the embodiment of the present invention that, a gateway equipment, such as a router, may be used to interactively transmit the URL information with the cloud security server cluster; also, the local cache or interactive transmission on the local service function entity may be used to enhance user experience and increase the resource utilization efficiency. Through the various implementation modes, the spreading or attacking of malwares such as viruses are effectively prevented, and time for filtering is greatly shortened, which enhances the user experience, reduces the interaction with the cloud end, and saves network and interface resources at the same time.

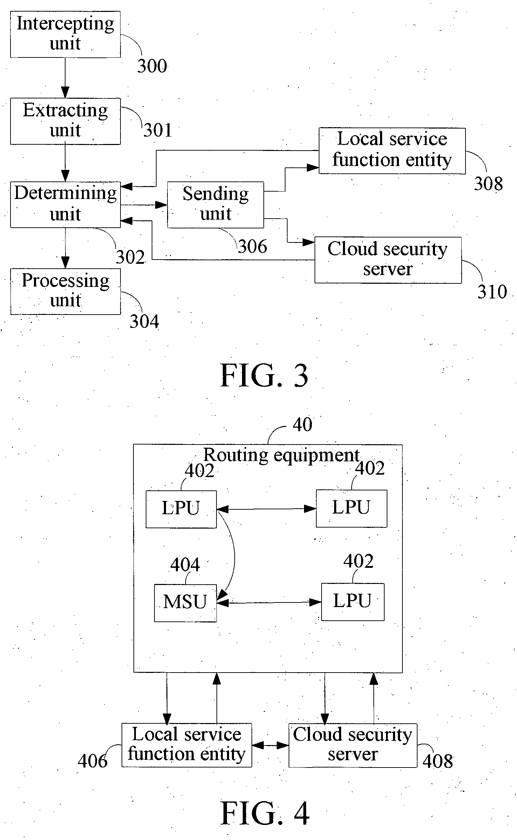

FIG 3 is a schematic structural diagram of a filtering system according to an embodiment of the present invention.

A filtering system is applied to network side equipment, and the system includes an intercepting unit 300, an extracting unit 301, a determining unit 302, a processing unit 304, a sending unit 306, a local service function entity 308, and a cloud security server 310.

The intercepting unit 300 is configured to intercept a request packet sent by a user terminal to an Internet server, and send the packet to the extracting unit 301.

The extracting unit 301 is configured to extract URL information from the request packet and send the URL information to the determining unit.

The determining unit 302 is configured to determine a security level corresponding to the URL information according to the URL information sent by the extracting unit 301, and send the security level to the processing unit 304.

The processing unit 304 is configured to process the request packet according to the security level determined by the determining unit 302.

The security level information includes one or any combination of: safe, dangerous, doubtful, and unknown.

The processing of the request packet by the processing unit 304 according to different combinations or compositions of the security level information includes one or any combination of the following.
(1) When the security level information is safe, the request packet of the user terminal is sent to the Internet server; the user terminal receives a response packet from the Internet server.
(2) When the security level information is dangerous, the request packet is discarded, and a packet with alarm information is returned to the user terminal to prohibit the user terminal from sending the request packet. For example, the "dangerous" may be that the web page addressed by the URL includes malicious Trojan horse softwares and/or viruses, and then the request packet is discarded right away, and a page or information saying "The web page contains malicious codes like viruses, etc.; visiting is prohibited" is fed back to the user terminal so that the user terminal may give up such a request according to the prompt.
(3) When the security level information is doubtful, a prompt message is returned to the user terminal to prompt the user terminal that the requested information is doubtful and suggest that the user terminal does not visit the page. If the user terminal insists on visiting in spite of the prompt message, the router continues forwarding the request packets to the Internet; however, certain potential risks exist in such cases. If the user terminal confirms, according to the prompt message, not continuing visiting, the router discards the request packet right away, or the request packet may be discarded right away according to the user setting.
(4) When the security level information is unknown, two modes are available for the user terminal: firstly, sending the URL information to other network equipment to determine the security level, and performing processing according to the returned security level; secondly, sending the request packet of the user terminal to the Internet and then detecting and processing afterwards.

When the determining unit 302 fails to find the security level corresponding to the URL information in the locally cached URL database, or when it is necessary to obtain the security level from the local service function entity, the system further includes:
a sending unit 306, configured to send the URL information to the local service function entity or to the cloud security server, and send the security level which is corresponding to the URL information and is returned from the local service function entity or from the cloud security server to the determining unit 302; and
a local service function entity 308, connected with the sending unit 306, and configured to search the locally cached URL database and determine the security level of the URL information according to the URL information, and then return the URL information to the determining unit 302.

The local service function entity 308 stores a URL database, and each piece of the URI information in the URL database has a security level indicator corresponding to the URL information.

When the local service function entity 308 fails to find the security level corresponding to the URL information in the locally cached URL database, that is, the security level corresponding to the URL information cannot be determined, or when it is necessary to obtain the security level directly from the cloud security server, the system further includes:
a cloud security server 310, configured to receive the URL information sent to the cloud security server; the cloud security server 310 searches the URL list in the locally cached URL database, determines the security level corresponding to the URL information, and sends the security level to the processing unit 304.

The URL database is updated periodically through the cloud security server 310. The URL database stores the URL information and the security level corresponding to the URL information. This corresponding relationship is also named as a URL list, that is, the URL database stores the URL list, and the corresponding security level may be found out through the URL information in the URL list and the URL list is updated through an aging mechanism.

It can be known from the foregoing detailed solution provided by the embodiment of the present invention that, the request packet sent by the user terminal to the Internet server is intercepted by the intercepting unit 300 and URL information is extracted by the extracting unit 301 from the request packet; the determining unit 302 determines the security level corresponding to the URL information according to the URL information; and the request packet is processed by the processing unit 304 according to the security level. Therefore, the problem that the installation of antivirus softwares in the user terminal occupies memory space and CUP resources and the problem of the risk of being bypassed by malwares are solved, which effectively prevents malwares such as viruses from spreading and attacking, reduces the threat to the user terminal from viruses, and improves network security and user experience.

FIG 4 is a schematic structural diagram of a detailed implementation of a filtering system according to an embodiment of the present invention.

FIG 4 is a detailed implementation of the system described in FIG 3; the filtering system is applied to the network side equipment. Taking a routing equipment of the gateway equipment for example, but the present invention is not limited to the routing equipment.

The routing equipment 40 includes a line processing unit (LPU) 402 and a multi-service unit (MSU) 404. The LPU 402 and the MSU 404 may be integrated in one device, and there may be one or multiple LPUs 402 and one or multiple MSUs 404.

The routing equipment may be one or any combination of network equipments such as an SR, a BRAS, and a GGSN.

The LPU 402 is configured to intercept a request packet sent by a user terminal to an Internet server, and send the URL information to the MSU 404.

The MSU 404 is configured to extract URL information from the request packet, determine a security level corresponding to the URL information according to the URL information, and process the request packet according to returned security level.

The routing equipment 40 is connected with a local service function entity 406 and/or a cloud security server 408.

The detailed interaction processes among different entities are as follows.

The LPU 402 intercepts the request packet sent by the user terminal to the Internet (for example, an http get packet with a target port 80), and redirects the request packet to the MSU 404 by means of an access control list (ACL). The MSU 404 extracts the ural information from the request packet by means of deep packet inspection (DPI) or other means.

The MSU 404 may search the URL list in the locally cached URL database and judge whether a security level corresponding to the URL information exists; or directly obtain the security level corresponding to the URL information from the local service function entity 406 or from the cloud security server 408.

When the MSU 404 fails to find out the security level corresponding to the URL information by searching in the URL database locally cached by the MSU 404, the MSU 404 sends the URL information to the local service function entity 406. The local service function entity 406 searches in the URL database locally cached by the local service function entity 406 itself, and if the security level corresponding to the URL information is found, the security level is sent to the MSU 404; otherwise, the URL information is sent to the cloud security server 408 through a dedicated interface. The cloud security server 408 searches the locally cached URL database, determines and returns the security level corresponding to the URL information to the MSU 404.

The routing equipment 40 and the cloud security server 408 may be connected by using a high-bandwidth and low-delay link for transmission optimization.

The security level information includes one or any combination of: safe, dangerous, doubtful, and unknown. The security level includes a security evaluation level and/or a content evaluation level. The security evaluation level may be classified according to the risk control level defined as required by a user; for example, high, medium, and low security evaluation levels and so on may be configured according to user requirements; filtering can be done according to the configuration afterwards. The content evaluation level can be classified according to the content included in web pages into, for example, adult content, and content that children may have access, and so on. The security evaluation level may be combined with the content evaluation level in the form of one or any combination of the classifications to sum up and obtain the four types of the security level information, namely, safe, dangerous, doubtful, and unknown.

According to different combinations or compositions of the security levels, the processing of request packet by the MSU 404 includes one or any combination of the following.
(1) When the security level information is safe, the request packet of the user terminal is sent to the Internet server; and the user terminal receives a response packet from the Internet server.
(2) When the security level information is dangerous, the request packet is discarded, and a packet with alarm information is returned to the user terminal to prohibit the user terminal from sending the request packet; for example, the "dangerous" may be that the web page addressed by the URL contains malicious Trojan horse softwares and/or viruses, then the request packet is discarded right away, and a page or information saying "The web page includes malicious codes like viruses, etc.; visiting is prohibited" is fed back to the user terminal so that the user terminal may give up such a request according to the prompt.
(3) When the security level information is doubtful, a prompt message is returned to the user terminal to prompt the user terminal that the requested information is doubtful and suggest that the user terminal not visit the page. If the user terminal insists on visiting in spite of the prompt message, the router continues sending the request packet to the Internet; however, a certain potential risk exists in such cases. If the user terminal confirms not continuing visiting according to the prompt message, the router discards the request packets directly, or the request packet may be discarded directly according to the user configuration.
(4) When the security level information is unknown, two modes are available for the user terminal: firstly, sending the URL information to other network equipment to determine the security level, and performing processing according to the returned security level; secondly, sending the request packet of the user terminal to the Internet server and then performing detecting and processing.

The URL database in the local cache of the routing equipment and the URL database in the local cache of the local service function entity are updated periodically through other network equipment. The security level information in the URL database in the local cache of the routing equipment and in the URL database in the local cache of the local service function entity are ever changing, so an update mechanism is needed. The URL database in the local cache of the routing equipment and the URL database in the local cache of the local service function entity are updated at regular time intervals. The time interval may be 30 seconds, and may also be adjusted according to actual situations. The other equipment may be the cloud security equipment or the local service function entity.

The URL database stores a URL list; the URL list is the corresponding relationship between the URL information and the security level, that is, the security level corresponding to the URL information is determined by the URL list. The URL list is updated by an aging mechanism. The URL database keeps caching the information in the URL list, resulting in more and more information in the URL list of the local cache; however, some of the information may be rarely used. Thus, an aging mechanism is needed to age the information in the URL list which fails to be matched within a certain time interval (the aging time may be 30 minutes, and may also be adjusted according to actual situations), thus resources of the router are saved and the matching efficiency is increased.

It can be known from the detailed solution provided by the embodiment of the present invention that, if interactive transmission of the URL information is adopted between the routing equipment and the cloud security server cluster, less time is needed and user browsing experience is unaffected. Also, the local cache or interactive transmission on the local service function entity may be adopted to enhance the user experience and increase the resource utilization efficiency. Through the foregoing various implementation modes, the spreading or attacking of viruses are effectively prevented, and time for filtering is greatly shortened, thus the user experience is enhanced, the interaction with the cloud end is reduced, and network and interface resources are saved.

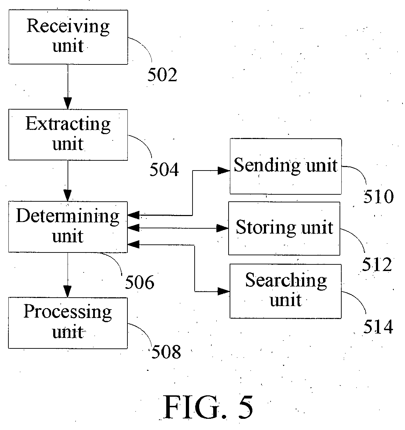

FIG 5 is a schematic structural diagram of a network equipment according to an embodiment of the present invention.

A network equipment includes:
a receiving unit 502, configured to receive a request packet including URL information;
an extracting unit 504, configured to extract the URL information from the request packet;
a determining unit 506, configured to determine a corresponding security level of the URL information according to the URL information; and
a processing unit 508, configured to process the request packet according to the security level.

The network equipment further includes:
a storing unit 512, configured to store the URL information and the security level corresponding to the URL information.
a searching unit 514, configured to search the URL database stored in the storing unit 512 for the security level corresponding to the URL information according to the URL information, and send the security level to the determining unit 506.

The network equipment may be a multi-service unit (MSU). When the security level corresponding to the URL information fails to be determined, the network equipment further includes a sending unit 510, configured to send the URL information to the local service function entity or to the cloud security server for processing, and send the security level which is corresponding to the URL information and is returned from the local service function entity or from the cloud security server to the determining unit 506 for processing.

When the network equipment is the MSU, it may be integrated in a line processing unit (LPU).

The network equipment provided by the foregoing embodiment of the present invention solves the problem that the installation of antivirus softwares in user terminal occupies memory space and CUP resources and the problem of the risk of being bypassed by malwares, which effectively prevents viruses from spreading and attacking, reduces the threat to user terminal from viruses, and improves the network security and user experience.

## Claims

1. A filtering method, carried out by a network equipment, comprising:
intercepting (S100) a request packet sent by a user terminal to an Internet server;
extracting (S101) Uniform Resource Locator, URL, information from the request packet;
determining (S102) a security level according to the URL information, wherein the security level is a level of threat that an access to the URL would represent to the user terminal and the security level is one of safe, dangerous, doubtful, or 'unknown'; and
when the security level is safe, sending the request packet of the user terminal to the Internet server;
when the security level is dangerous, discarding the request packet to terminate the request for the URL by the user terminal;
when the security level is doubtful, returning a prompt message to the user terminal to inform the user terminal that the request is doubtful; and
when the security level is 'unknown', sending the URL information to other network equipment for determining the security level, and processing according to returned security level.

2. The method according to claim 1, wherein the determining (S102) the security level corresponding to the URL information comprises:
searching (S204) the security level corresponding to the URL information in a URL database locally cached in said network equipment, and determining the security level corresponding to the URL information; or,
receiving the security level of the URL information determined and returned by a local service function entity after the local service function entity receives the URL information from the network equipment and the local service function entity subsequently searches in a locally cached URL database in the local service function entity and determines the security level of the URL information; or,
receiving the security level of the URL information determined and returned by a cloud security server; wherein the security level of the URL information is the security level returned after the cloud security server receives the URL information from the network equipment and subsequently searches in a URL database at the cloud end and determines the security level of the URL information; or,
receiving the security level determined and returned by the local service function entity (S208) when searching in the URL database locally cached in the network equipment and failing to find out the security level corresponding to the URL information in the URL database in the network equipment, wherein the security level of the URL information is the security level returned after the local service function entity receives the URL information from the network equipment and subsequently searches in the locally cached URL database in the local service function entity and determines the security level of the URL information; or,
receiving the security level of the URL information determined and returned by the cloud security server (S212) when the searching in the URL database cached in the network equipment and, after receiving the URL information by the local service function entity from the network equipment, the URL database cached in the local service function entity fails to find the security level corresponding to the URL information, wherein the security level of the URL information is the security level returned after the cloud security server receives the URL information from the local service function entity and subsequently searches in the URL database at the cloud end and determines the security level of the URL information.

3. A filtering system, applied to a network equipment, comprising:
an intercepting unit (300), configured to intercept a request packet sent by a user terminal to an Internet server, and send the packet to an extracting unit;
an extracting unit (301), configured to extract Uniform Resource Locator, URL, information from the request packet and send the URL information to a determining unit;
a determining unit (302), configured to determine a security level according to the URL information, wherein the security level is a level of threat that an access to the URL would represent to the user terminal and the security level is one of safe, dangerous, doubtful, or 'unknown'; and
a processing unit (304), configured to,
when the security level is safe, send the request packet of the user terminal to the Internet server;
when the security level is dangerous, discard the request packet to terminate the request for the URL by the user terminal;
when the security level is doubtful, return a prompt message to the user terminal to inform the user terminal that the request is doubtful; and
when the security level is 'unknown', send the URL information to other network equipment for determining the security level, and processing according to returned security level.

4. The system according to claim 3, further comprising:
a sending unit (306), configured to send the URL information to a local service function entity or a cloud security server.

5. The system according to claim 4, further comprising:
a local service function entity (308), configured to search a locally cached URL database according to the URL information sent by the sending unit (306), determine the security level of the URL information, and return the security level to the determining unit.

6. The system according to claim 4, further comprising:
a cloud security server (310), configured to search a locally cached URL database according to the URL information sent by the sending unit (306), determine the security level corresponding to the URL information, and send the security level to the determining unit (302).

7. The system according to claim 6, wherein the URL database is updated periodically through the cloud security server (310).

8. A network equipment for filtering request packets sent by a user terminal, comprising:
a receiving unit (502), configured to receive a request packet including Uniform Resource Locator, URL, information corresponding to an Internet server;
an extracting unit (504), configured to extract the URL information from the request packet;
a determining unit (506), configured to determine a security level according to the URL information, wherein the security level is a level of threat that an access to the URL would represent to the user terminal and the security level is one of safe, dangerous, doubtful, or 'unknown'; and
a processing unit (508), configured to,
when the security level is safe, send the request packet of the user terminal to the Internet server;
when the security level is dangerous, discard the request packet to terminate the request for the URL by the user terminal;
when the security level is doubtful, return a prompt message to the user terminal to inform the user terminal that the request is doubtful; and
when the security level is 'unknown', send the URL information to other network equipment for determining the security level, and processing according to returned security level.

9. The network equipment according to claim 8, further comprising:
a storing unit (512), configured to store the URL information and the security level corresponding to the URL information; and
a searching unit (514), configured to search a URL database stored in the storing unit (512) for the security level corresponding to the URL information according to the URL information, and send the security level to the determining unit (506).

10. The network equipment according to claim 9, further comprising:
a sending unit (510), configured to send the URL information to a local service function entity (406) or to a cloud security server (408), and send the security level which is corresponding to the URL information and is returned from the local service function entity (406) or from the cloud security server (408) to the determining unit (506) for being processed.

11. The network equipment according to claim 10, wherein the URL database is updated periodically through the cloud security server (408).

## Patentansprüche

1. Filterungsverfahren, das von einer Netzeinrichtung ausgeführt wird und umfasst:
Abfangen (S100) eines Anforderungspakets, das von einem Benutzerendgerät an einen Internetserver gesendet wird;
Extrahieren (S101) von URL ("Uniform Resource Locator")-Informationen aus dem Anforderungspaket;
Bestimmen (S102) eines Sicherheitsniveaus gemäß den URL-Informationen, wobei das Sicherheitsniveau ein Niveau von Bedrohung ist, die ein Zugriff auf die URL für das Benutzerendgerät darstellen würde, und das Sicherheitsniveau eines von sicher, gefährlich, zweifelhaft oder "unbekannt" ist; und
Senden, wenn das Sicherheitsniveau sicher ist, des Anforderungspakets des Benutzerendgeräts an den Internetserver;
Verwerfen, wenn das Sicherheitsniveau gefährlich ist, des Anforderungspakets, um die Anforderung für die URL durch das Benutzerendgerät zu beenden;
Zurücksenden, wenn das Sicherheitsniveau zweifelhaft ist, einer Aufforderungsnachricht an das Benutzerendgerät, um das Benutzerendgerät zu informieren, dass die Anforderung zweifelhaft ist; und
Senden, wenn das Sicherheitsniveau "unbekannt" ist, der URL-Informationen an eine andere Netzeinrichtung zum Bestimmen des Sicherheitsniveaus und Verarbeiten gemäß dem zurückgesendeten Sicherheitsniveau.

2. Verfahren nach Anspruch 1, wobei das Bestimmen (S102) des Sicherheitsniveaus, das den URL-Informationen entspricht, umfasst:
Suchen (S204) des Sicherheitsniveaus, das den URL-Informationen entspricht, in einer URL-Datenbank, die in der Netzeinrichtung lokal zwischengespeichert wird, und Bestimmen des Sicherheitsniveaus, das den URL-Informationen entspricht; oder
Empfangen des Sicherheitsniveaus der URL-Informationen, das von einer lokalen Dienstfunktionsinstanz bestimmt und zurückgesendet wird, nachdem die lokale Dienstfunktionsinstanz die URL-Informationen von der Netzeinrichtung empfängt und die lokale Dienstfunktionsinstanz anschließend das Sicherheitsniveau der URL-Informationen in einer lokal zwischengespeicherten URL-Datenbank in der lokalen Dienstfunktionsinstanz sucht und bestimmt; oder
Empfangen des Sicherheitsniveaus der URL-Informationen, das von einem Cloud-Sicherheitsserver bestimmt und zurückgesendet wird; wobei das Sicherheitsniveau der URL-Informationen das Sicherheitsniveau ist, das zurückgesendet wird, nachdem der Cloud-Sicherheitsserver die URL-Informationen von der Netzeinrichtung empfängt und anschließend das Sicherheitsniveau der URL-Informationen in einer URL-Datenbank am Cloud-Ende sucht und bestimmt; oder
Empfangen des Sicherheitsniveaus, das von der lokalen Dienstfunktionsinstanz bestimmt und zurückgesendet wird (S208), wenn in der URL-Datenbank gesucht wird, die in der Netzeinrichtung lokal zwischengespeichert ist, und das Sicherheitsniveau, das den URL-Informationen entspricht, in der URL-Datenbank in der Netzeinrichtung nicht gefunden wird, wobei das Sicherheitsniveau der URL-Informationen das Sicherheitsniveau ist, das zurückgesendet wird, nachdem die lokale Dienstfunktionsinstanz die URL-Informationen von der Netzeinrichtung empfängt und anschließend das Sicherheitsniveau der URL-Informationen in der lokal zwischengespeicherten URL-Datenbank in der lokalen Dienstfunktionsinstanz sucht und bestimmt; oder
Empfangen des Sicherheitsniveaus der URL-Informationen, das vom Cloud-Sicherheitsserver bestimmt und zurückgesendet wird (S212), wenn in der URL-Datenbank gesucht wird, die in der Netzeinrichtung zwischengespeichert ist, und nach dem Empfangen der URL-Informationen durch die lokale Dienstfunktionsinstanz von der Netzeinrichtung, die in der lokalen Dienstfunktionsinstanz zwischengespeicherten URL-Datenbank das den URL-Informationen entsprechende Sicherheitsniveau nicht findet, wobei das Sicherheitsniveau der URL-Informationen das Sicherheitsniveau ist, das zurückgesendet wird, nachdem der Cloud-Sicherheitsserver die URL-Informationen von der lokalen Dienstfunktionsinstanz empfängt und anschließend das Sicherheitsniveau der URL-Informationen in der URL-Datenbank am Cloud-Ende sucht und bestimmt.

3. Filterungssystem, das auf eine Netzeinrichtung angewendet wird und umfasst:
eine Abfangeinheit (300), die so konfiguriert ist, dass sie ein Anforderungspaket abfängt, das von einem Benutzerendgerät an einen Internetserver gesendet wird, und das Paket an eine Extraktionseinheit sendet;
eine Extraktionseinheit (301), die so konfiguriert ist, dass sie URL ("Uniform Resource Locator")-Informationen aus dem Anforderungspaket extrahiert und die URL-Informationen an eine Bestimmungseinheit sendet;
eine Bestimmungseinheit (302), die so konfiguriert ist, dass sie ein Sicherheitsniveau gemäß den URL-Informationen bestimmt, wobei das Sicherheitsniveau ein Niveau von Bedrohung ist, die ein Zugriff auf die URL für das Benutzerendgerät darstellen würde, und das Sicherheitsniveau eines von sicher, gefährlich, zweifelhaft oder "unbekannt" ist; und
eine Verarbeitungseinheit (304), die konfiguriert ist zum:
Senden, wenn das Sicherheitsniveau sicher ist, des Anforderungspakets des Benutzerendgeräts an den Internetserver;
Verwerfen, wenn das Sicherheitsniveau gefährlich ist, des Anforderungspakets, um die Anforderung für die URL durch das Benutzerendgerät zu beenden;
Zurücksenden, wenn das Sicherheitsniveau zweifelhaft ist, einer Aufforderungsnachricht an das Benutzerendgerät, um das Benutzerendgerät zu informieren, dass die Anforderung zweifelhaft ist; und
Senden, wenn das Sicherheitsniveau "unbekannt" ist, der URL-Informationen an eine andere Netzeinrichtung zum Bestimmen des Sicherheitsniveaus und Verarbeiten gemäß dem zurückgesendeten Sicherheitsniveau.

4. System nach Anspruch 3, ferner umfassend:
eine Sendeeinheit (306), die so konfiguriert ist, dass sie die URL-Informationen an eine lokale Dienstfunktionsinstanz oder einen Cloud-Sicherheitsserver sendet.

5. System nach Anspruch 4, ferner umfassend:
eine lokale Dienstfunktionsinstanz (308), die so konfiguriert ist, dass sie eine lokal zwischengespeicherte URL-Datenbank gemäß den von der Sendeeinheit (306) gesendeten URL-Informationen absucht, das Sicherheitsniveau der URL-Informationen bestimmt und das Sicherheitsniveau an die Bestimmungseinheit zurücksendet.

6. System nach Anspruch 4, ferner umfassend:
einen Cloud-Sicherheitsserver (310), der so konfiguriert ist, dass er eine lokal zwischengespeicherte URL-Datenbank gemäß den von der Sendeeinheit (306) gesendeten URL-Informationen absucht, das Sicherheitsniveau, das den URL-Informationen entspricht, bestimmt und das Sicherheitsniveau an die Bestimmungseinheit (302) sendet.

7. System nach Anspruch 6, wobei die URL-Datenbank durch den Cloud-Sicherheitsserver (310) periodisch aktualisiert wird.

8. Netzeinrichtung zum Filtern von Anforderungspaketen, die von einem Benutzerendgerät gesendet werden, umfassend:
eine Empfangseinheit (502), die so konfiguriert ist, dass sie ein Anforderungspaket empfängt, das URL ("Uniform Resource Locator")-Informationen umfasst, die einem Internetserver entsprechen;
eine Extraktionseinheit (504), die so konfiguriert ist, dass sie die URL-Informationen aus dem Anforderungspaket extrahiert;
eine Bestimmungseinheit (506), die so konfiguriert ist, dass sie ein Sicherheitsniveau gemäß den URL-Informationen bestimmt, wobei das Sicherheitsniveau ein Niveau von Bedrohung ist, die ein Zugriff auf die URL für das Benutzerendgerät darstellen würde,
und das Sicherheitsniveau eines von sicher, gefährlich, zweifelhaft oder "unbekannt" ist; und
eine Verarbeitungseinheit (508), die konfiguriert ist zum:
Senden, wenn das Sicherheitsniveau sicher ist, des Anforderungspakets des Benutzerendgeräts an den Internetserver;
Verwerfen, wenn das Sicherheitsniveau gefährlich ist, des Anforderungspakets, um die Anforderung für die URL durch das Benutzerendgerät zu beenden;
Zurücksenden, wenn das Sicherheitsniveau zweifelhaft ist, einer Aufforderungsnachricht an das Benutzerendgerät, um das Benutzerendgerät zu informieren, dass die Anforderung zweifelhaft ist; und
Senden, wenn das Sicherheitsniveau "unbekannt" ist, der URL-Informationen an eine andere Netzeinrichtung zum Bestimmen des Sicherheitsniveaus und Verarbeiten gemäß dem zurückgesendeten Sicherheitsniveau.

9. Netzeinrichtung nach Anspruch 8, ferner umfassend:
eine Speichereinheit (512), die so konfiguriert ist, dass sie die URL-Informationen und das Sicherheitsniveau, das den URL-Informationen entspricht, speichert;
eine Sucheinheit (514), die so konfiguriert ist, dass sie eine in der Speichereinheit (512) gespeicherte URL-Datenbank nach dem Sicherheitsniveau, das den URL-Informationen entspricht, gemäß den URL-Informationen absucht und das Sicherheitsniveau an die Bestimmungseinheit (506) sendet.

10. Netzeinrichtung nach Anspruch 9, ferner umfassend:
eine Sendeeinheit (510), die so konfiguriert ist, dass sie die URL-Informationen an eine lokale Dienstfunktionsinstanz (406) oder an einen Cloud-Sicherheitsserver (408) sendet, und das Sicherheitsniveau, das den URL-Informationen entspricht und von der lokalen Dienstfunktionsinstanz (406) oder vom Cloud-Sicherheitsserver (408) zurückgesendet wird, zur Verarbeitung an die Bestimmungseinheit (506) sendet.

11. Netzeinrichtung nach Anspruch 10, wobei die URL-Datenbank durch den Cloud-Sicherheitsserver (408) periodisch aktualisiert wird.

## Revendications

1. Procédé de filtrage exécuté par un équipement en réseau, comprenant :
l'interception (S 100) d'un paquet de demande envoyé par un terminal utilisateur à un serveur Internet,
l'extraction (S101) d'informations d'adresse uniforme de ressource, URL, du paquet de demande,
la détermination (S102) d'un niveau de sécurité en fonction des informations d'adresse URL, le niveau de sécurité étant un niveau concernant la menace que représenterait pour le terminal utilisateur un accès à l'adresse URL, et le niveau de sécurité étant l'un parmi : sûr, dangereux, douteux ou « inconnu », et
l'envoi du paquet de demande, lorsque le niveau de sécurité est sûr, depuis le terminal utilisateur jusqu'au serveur Internet,
le rejet du paquet de demande par le terminal utilisateur, lorsque le niveau de sécurité est dangereux, pour achever la demande concernant l'adresse URL,
le renvoi d'un message d'invite au terminal utilisateur, lorsque le niveau de sécurité est douteux, pour informer celui-ci que la demande est douteuse, et
l'envoi, lorsque le niveau de sécurité est « inconnu », des informations d'adresse URL à un autre équipement en réseau afin de déterminer le niveau de sécurité, et le traitement en fonction du niveau de sécurité renvoyé.

2. Procédé selon la revendication 1, dans lequel la détermination (S102) du niveau de sécurité correspondant aux informations d'adresse URL comprend :
la recherche (S204) du niveau de sécurité correspondant aux informations d'adresse URL dans une base de données d'adresses URL mise localement en tampon dans ledit équipement en réseau, et la détermination du niveau de sécurité correspondant aux informations d'adresse URL, ou
la réception du niveau de sécurité des informations d'adresse URL, déterminé et renvoyé par une entité de fonction de service local après que l'entité de fonction de service local a reçu les informations d'adresse URL de l'équipement en réseau et que l'entité de fonction de service local a fait ensuite des recherches dans une base de données d'adresses URL, localement en tampon dans l'entité de fonction de service local, et a déterminé le niveau de sécurité des informations d'adresse URL, ou
la réception du niveau de sécurité des informations d'adresse URL, déterminé et renvoyé par un serveur de sécurité de stockage de contenu dématérialisé, le niveau de sécurité des informations d'adresse URL étant le niveau de sécurité renvoyé après que le serveur de sécurité de stockage dématérialisé a reçu les informations d'adresse URL de l'équipement en réseau, a fait ensuite des recherches dans une base de données d'adresses URL au niveau du stockage dématérialisé et a déterminé le niveau de sécurité des informations d'adresse URL, ou
la réception du niveau de sécurité, déterminé et renvoyé par l'entité de fonction de service local (S208), lors de la recherche dans la base de données d'adresses URL, localement en tampon dans l'équipement en réseau, et l'échec concernant la découverte du niveau de sécurité correspondant aux informations d'adresse URL dans la base de données d'adresses URL dans l'équipement en réseau, le niveau de sécurité des informations d'adresse URL étant le niveau de sécurité renvoyé après que l'entité de fonction de service local a reçu les informations d'adresse URL de l'équipement en réseau, a fait ensuite des recherches dans la base de données d'adresses URL, localement en tampon dans l'entité de fonction de service local, et a déterminé le niveau de sécurité des informations d'adresse URL, ou
la réception du niveau de sécurité des informations d'adresse URL, déterminé et renvoyé par le serveur de sécurité de stockage dématérialisé (S212), lors de la recherche dans la base de données d'adresses URL, en tampon dans l'équipement en réseau et, après réception des informations d'adresse URL en provenance de l'équipement en réseau par l'entité de fonction de service local, la base de données d'adresses URL, en tampon dans l'entité de fonction de service local, échoue à trouver le niveau de sécurité correspondant aux informations d'adresse URL, le niveau de sécurité des informations d'adresse URL étant le niveau de sécurité renvoyé après que le serveur de sécurité de stockage dématérialisé a reçu les informations d'adresse URL de l'entité de fonction de service local, a fait ensuite des recherches dans la base de données d'adresses URL au niveau du stockage dématérialisé, et a déterminé le niveau de sécurité des informations d'adresse URL.

3. Système de filtrage appliqué à un équipement en réseau, comprenant :
une unité d'interception (300) configurée pour intercepter un paquet de demande envoyé par un terminal utilisateur à un serveur Internet, et pour envoyer le paquet à une unité d'extraction,
une unité d'extraction (301) configurée pour extraire des informations d'adresse uniforme de ressource, URL, du paquet de demande, et pour envoyer les informations d'adresse URL à une unité de détermination,
une unité de détermination (302) configurée pour déterminer un niveau de sécurité en fonction des informations d'adresse URL, le niveau de sécurité étant un niveau concernant la menace que représenterait pour le terminal utilisateur un accès à l'adresse URL, et le niveau de sécurité étant l'un parmi : sûr, dangereux, douteux ou « inconnu », et
une unité de traitement (304) configurée pour :
envoyer le paquet de demande, lorsque le niveau de sécurité est sûr, depuis le terminal utilisateur jusqu'au serveur Internet,
rejeter le paquet de demande par le terminal utilisateur, lorsque le niveau de sécurité est dangereux, pour achever la demande concernant l'adresse URL,
renvoyer un message d'invite au terminal utilisateur, lorsque le niveau de sécurité est douteux, pour informer celui-ci que la demande est douteuse, et
envoyer, lorsque le niveau de sécurité est « inconnu », des informations d'adresse URL à un autre équipement en réseau afin de déterminer le niveau de sécurité, et effectuer le traitement en fonction du niveau de sécurité renvoyé.

4. Système selon la revendication 3, comprenant en outre :
une unité d'envoi (306) configurée pour envoyer les informations d'adresse URL à une entité de fonction de service local ou à un serveur de sécurité de stockage dématérialisé.

5. Système selon la revendication 4, comprenant en outre :
une entité de fonction de service local (308) configurée pour effectuer des recherches dans une base de données d'adresses URL, localement en tampon, en fonction des informations d'adresse URL envoyées par l'unité d'envoi (306), pour déterminer le niveau de sécurité des informations d'adresse URL et pour renvoyer le niveau de sécurité à l'unité de détermination.

6. Système selon la revendication 4, comprenant en outre :
un serveur de sécurité de stockage dématérialisé (310) configuré pour effectuer des recherches dans une base de données d'adresses URL, localement en tampon, en fonction des informations d'adresse URL envoyées par l'unité d'envoi (306), pour déterminer le niveau de sécurité correspondant aux informations d'adresse URL et pour envoyer le niveau de sécurité à l'unité de détermination (302).

7. Système selon la revendication 6, dans lequel la base de données d'adresses URL est mise à jour périodiquement par l'intermédiaire du serveur de sécurité de stockage dématérialisé (310).

8. Équipement en réseau destiné à filtrer des paquets de demandes envoyés par un terminal utilisateur, comprenant :
une unité de réception (502) configurée pour recevoir un paquet de demande incluant des informations d'adresse uniforme de ressource, URL, correspondant à un serveur Internet,
une unité d'extraction (504) configurée pour extraire les informations d'adresse URL du paquet de demande,
une unité de détermination (506) configurée pour déterminer un niveau de sécurité en fonction des informations d'adresse URL, le niveau de sécurité étant un niveau concernant la menace que représenterait pour le terminal utilisateur un accès à l'adresse URL, et le niveau de sécurité étant l'un parmi : sûr, dangereux, douteux ou « inconnu », et
une unité de traitement (508) configurée pour :
envoyer le paquet de demande, lorsque le niveau de sécurité est sûr, depuis le terminal utilisateur jusqu'au serveur Internet,
rejeter le paquet de demande par le terminal utilisateur, lorsque le niveau de sécurité est dangereux, pour achever la demande concernant l'adresse URL,
renvoyer un message d'invite au terminal utilisateur, lorsque le niveau de sécurité est douteux, pour informer celui-ci que la demande est douteuse, et
envoyer, lorsque le niveau de sécurité est « inconnu », les informations d'adresse URL à un autre équipement en réseau afin de déterminer le niveau de sécurité, et effectuer le traitement en fonction du niveau de sécurité renvoyé.

9. Équipement en réseau selon la revendication 8, comprenant en outre :
une unité de stockage (512) configurée pour stocker les informations d'adresse URL et le niveau de sécurité correspondant aux informations d'adresse URL, et
une unité de recherche (514) configurée pour effectuer des recherches dans une base de données d'adresses URL stockée dans l'unité de stockage (512) concernant le niveau de sécurité correspondant aux informations d'adresse URL en fonction des informations d'adresse URL, et envoyer le niveau de sécurité à l'unité de détermination (506).

10. Équipement en réseau selon la revendication 9, comprenant en outre :
une unité d'envoi (510) configurée pour envoyer les informations d'adresse URL à une entité de fonction de service local (406) ou à un serveur de sécurité de stockage dématérialisé (408), et pour envoyer le niveau de sécurité qui correspond aux informations d'adresse URL et qui est renvoyé depuis l'entité de fonction de service local (406) ou depuis le serveur de sécurité de stockage dématérialisé (408) à l'unité de détermination (506) pour être traité.

11. Équipement en réseau selon la revendication 10, dans lequel la base de données d'adresses URL est mise à jour périodiquement par l'intermédiaire du serveur de sécurité du stockage dématérialisé (408).
